# EUROPEAN PATENT SPECIFICATION

(11) **EP 3 055 200 B1**
(45) Date of publication and mention of the grant of the patent: **29.11.2017**
(21) Application number: 14798958.6
(22) Date of filing: 06.10.2014
(51) Int. Cl.: B63B 59/06

(54) **AUTOMATED BOATS WASHING DOCK AND RELATIVE METHOD FOR BOATS WASHING IN THE AUTOMATED BOATS WASHING DOCK**
DOCK ZUM AUTOMATISIERTEN WASCHEN VON SCHIFFEN UND ENTSPRECHENDES VERFAHREN ZUM WASCHEN VON SCHIFFEN IN DEM DOCK ZUM AUTOMATISIERTEN WASCHEN VON SCHIFFEN
QUAI DE NETTOYAGE DE BATEAUX AUTOMATISÉ ET PROCÉDÉ ASSOCIÉ DE NETTOYAGE DE BATEAUX DANS LEDIT QUAI DE NETTOYAGE DE BATEAUX AUTOMATISÉ

(30) Priority: 09.10.2013 IT CZ20130019
(43) Date of publication of application: 17.08.2016
(73) Proprietor: Impianti Portuali e Servizi Morace Srl, 35129 Padova (PD) (IT)
(72) Inventor: MORACE, Alberto, I-88100 Catanzaro (IT)
(74) Representative: Scorza, Federica
(86) International application number: PCT/IB2014/065091
(87) International publication number: WO 2015/052634

(56) References cited:
- DE-C1- 19 734 073
- FR-A1- 2 723 908
- US-A- 5 445 101
- US-A1- 2008 282 956
- US-B1- 7 444 952

## Description

The present invention relates to an automated boats washing dock.

In particular, the present invention relates to an automated boats washing dock of the type carrying out the complete boats washing directly into the sea.

The present invention relates also to a method for boats washing in the automated boats washing dock.

As is well known, in the field of crafts, the cleaning of the boats submerged part, the so-called "hull", is of great importance. Indeed, since the boat is put in the sea, a thin layer of vegetation begins to form on the bottom of the boat itself. This layer, consisting of bacteria, microorganisms, protozoa, and macro algae, tends to consolidate more and more, favoring the formation of small deposits that become very difficult to remove. The growth of these organisms leads to an appreciable decrease in the performance of the boat and, consequently, to a higher consumption of energy resources necessary for its thrust, as well as a slow and continuous deterioration of the hull.

The known solutions to solve this problem involve the treatment of the hull with poisonous chemicals, the so-called "anti-fouling", which, however, only slow down, without eliminating, the proliferation of organisms and micro-organisms, flora and fauna that is in contact with the hull. Moreover, the treatment is repeated once a year or every two years and requires a complex series of operations, such as: - haulage, which consists in the extraction of the boat from the water; - potting and pressure washing, through which the boat is dry placed; - The dock, which consists in the cleaning of the hull; - The launch, or the boat laying in the water. Therefore, the time taken to perform the dock is long and tedious and takes about one or two weeks of work. In addition, all of these operations has a relatively high cost, determines the pollution of the marine environment with the anti-fouling paints used and is also risky for operators and for the boat, because the hauling, the potting and pressure washing involve the lifting of the vessel by means of systems comprising pulleys and cables passed under the hull.

As an example, the patent DE 19734073 assigned on November 12, 1998 to FRAUNHOFER GES FORSCHUNG describes a method involving projecting a high pressure water jet over the surface of the hull which is raised out of the water. The lift to raise the hull out of the water for cleaning has at least two upwardly open U-shaped profiled supports. These have movable carriages, attached to each facing upper U-shank with winches each having a support strap. The cleaning jet has at least two water jet nozzles movable along and perpendicular to the marine vessel longitudinal axis and each positioned on the opposing sides of the hull.

The problem of this solution is that it's necessary that the hull is raised out of the water.

A recent solution of marine plant for the automatic washing of boats, in particular for cleaning the hull, is described in the international patent application US 2008282956 published on November 20, 2008 in the name of the same Applicant. The patent application describes a marine plant for the automatic washing of boats comprising a supporting structure partially submerged, means for cleaning the boat, means for transmitting the motion commanded by at least one motor suitable for reciprocally positioning at least part of said cleaning means in relation to the boat, and a command unit for the operator to control the marine plant.

However, this solution has the problem of the efficient utilization of the system described.

Purpose of the present invention is to provide an automated boats washing dock and relative method for boats washing in the automated boats washing dock, able to perform the automatic cleaning of the boat and in particular of the hull without removing the boat from the water and using the plant for the automatic washing patented by the same Applicant.

According to the present invention, an automated boats washing dock is realized, as defined in claim 1.

According to the present invention a method for boats washing in the automated boats washing dock is also realized, as defined in claim 6.

For a better understanding of the present invention a preferred embodiment is now described, purely as a nonlimiting example, with reference to the accompanying drawings, in which:
- Figure 1 shows a schematic view of a marine plant for the automatic washing of boats, according to the prior art;
- Figure 2 shows a schematic view of an automated boats washing dock, according to the invention;
- Figure 3 shows a schematic view of a flow diagram of a method for boats washing in the automated boats washing dock, according to the invention.

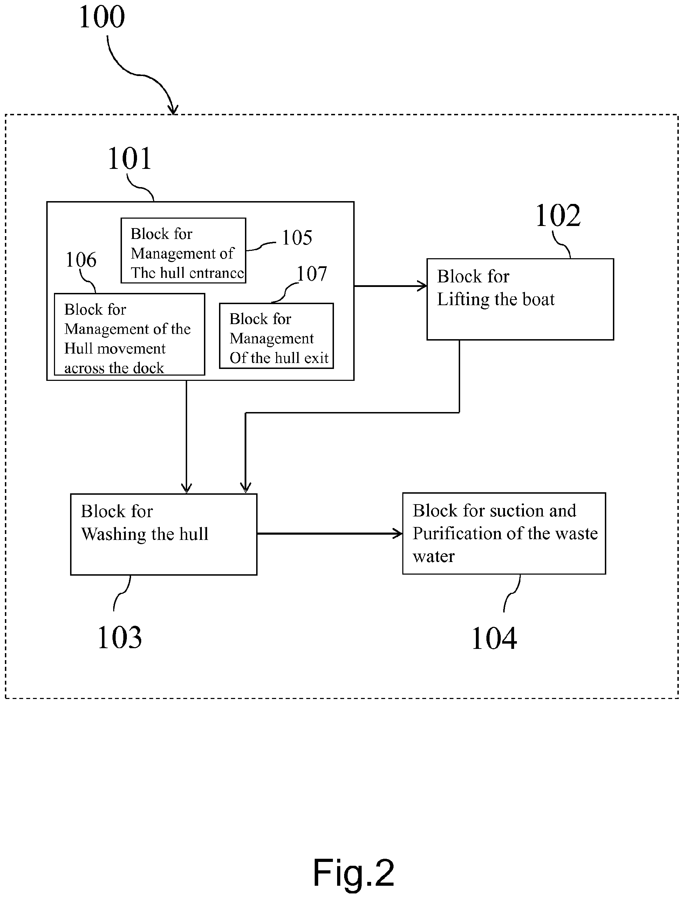

With reference to these figures, and, in particular, to Figure 2, an automated boats washing dock is shown, according to the invention. In details, the automated boats washing dock 100 comprises a translation block 101 for introducing and moving the hull within the dock, a block 102 for lifting the boat, a block 103 for washing the hull and a block 104 for suction and purification of the waste water of the hull washing.

Advantageously, according to the invention, the positioning of the boat in the dock 100 is performed by micrometric GPS means.

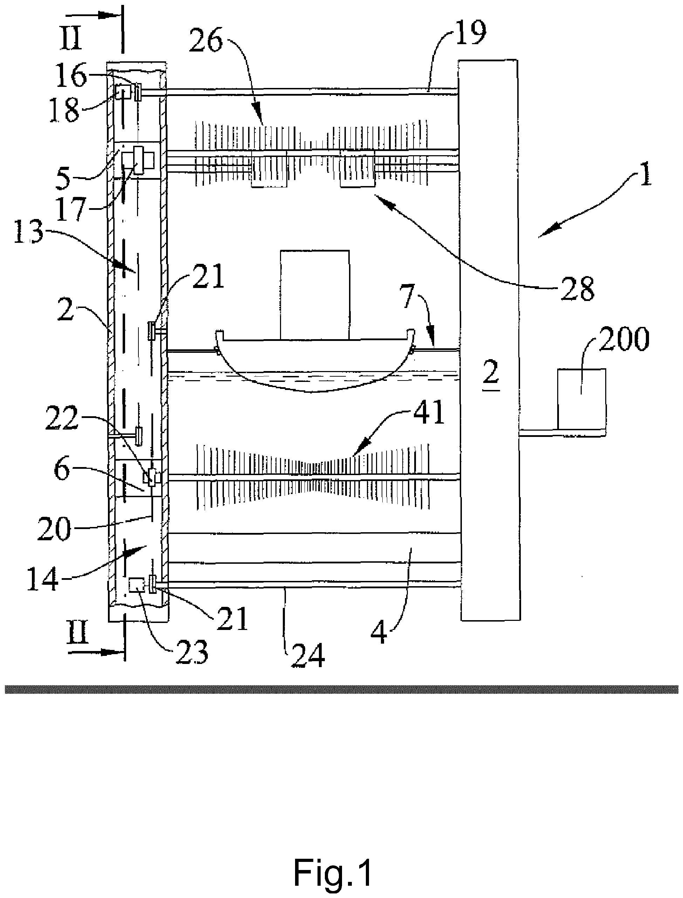

More in details, the translation block 101 for introducing and moving the hull within the dock comprises a block 105 for management of the hull entrance, configured for drawing the boats, for positioning them aligned to a predetermined distance axis inside the washing plant 1, shown in Figure 1, and finally for scanning the bottom of the hull by detecting the geometries and performing a computer reconstruction by means of a dedicated software.

According to an aspect of the invention, the translation block 101 comprises mechanical arms used for the handling of the hull. The mechanical arms are able to exercise contact with the hull by means of movable wheels and/or drag wheels and/or depreciated tampons, which are maintained into contact with the sides of the boat by means of power accessories (hydraulic type and/or electromechanical type). In particular, the power accessories maintain the contact with the hull ensuring a constant pressure by managing the control system by means of load cells and optical readers. Contact accessories are fixed to the mechanical arms by means of an articulation axle, so that they can oscillate around its articulation axis and adapt to the profile of the side of the hull.

According to an aspect of the invention, the dock 100 comprises a series of floating docks below the hull, such as to create a working area to perform maintenance of various types of the hull, of the appendages and of the governance and propulsion bodies of the boat.

Advantageously, according to the invention, the scanning of the hull is made by means of a laser beam per 10 cm of advancement.

Moreover, the block 101 comprises a block 106 for management of the hull movements across the dock 100 by means of the mechanical arms.

Advantageously, according to the invention, the block 106 is controlled hydraulically and/or electromechanically, determines the inversion of the motion and ensures the crossing of the washing area in both input and output directions, depending on the areas to be washed and on the predetermined washing path.

Finally, the block 101 comprises a block 107 for managing the hull exit, configured for accompanying the hull out of the automated boats washing dock 100 by means of the mechanical arms.

The block 102 for lifting the boat comprises mechanical hinged arms stretching towards predetermined gripping points of the hull, the points being established as a function of the detected hull geometry, and performing the lifting of the hull, in accordance with the current safety mechanics standards.

The block 103 for washing the hull comprises horizontal cylindrical rotating brushes having compressed air nozzles and suitable for cleaning the horizontal or inclined surfaces of the hull, up to a specific angle of the bottom of the hull detected by the scanning and reconstructed by means of the dedicated software. The block 103 comprises also rotating cylindrical vertical brushes having compressed air nozzles and suitable for cleaning the side surfaces of the hull and all surfaces that are not treatable with the horizontal cylindrical brushes, for example the axes' lines, the stands, the rudders, the propellers and each generic appendage detected by the scanning and reconstructed by the software. Moreover, these brushes are able to follow the shapes changes of the bottom of any hull by means of a servo mechanical and/or hydraulic system.

According to an aspect of the invention, the suction block 104 for exhausting and purifying the waste water of the hull washing is connected to suction inlets positioned close to the system 100.

According to another aspect of the invention, the suction and purification block 104 for suction and purification of the waste water of the hull washing is configured for exhausting the waste water within a closed water basin.

As explained above, the present application also relates to a method for boats washing in the automated boats washing dock above described. The method comprises the steps of:
- preparing the automated boats washing dock 100 by opening the mechanical arms configured for taking over the boat;
- supporting the boats entering and positioning within the automated boats washing dock 100;
- classifying the type of hull between:
   planing/displacing hull, sailing, catamaran/trimaran;
- closing the mechanical arms to take over the boat;
- scanning the boats to reconstruct its three-dimensional geometry, by means of a dedicated software;
- carrying out a boats treatment phase;
- storing the information on the treatment phase performed and connecting it to the license plate number of the boats;
- Releasing the hull and expelling the boats by means of the opening of the mechanical arms.

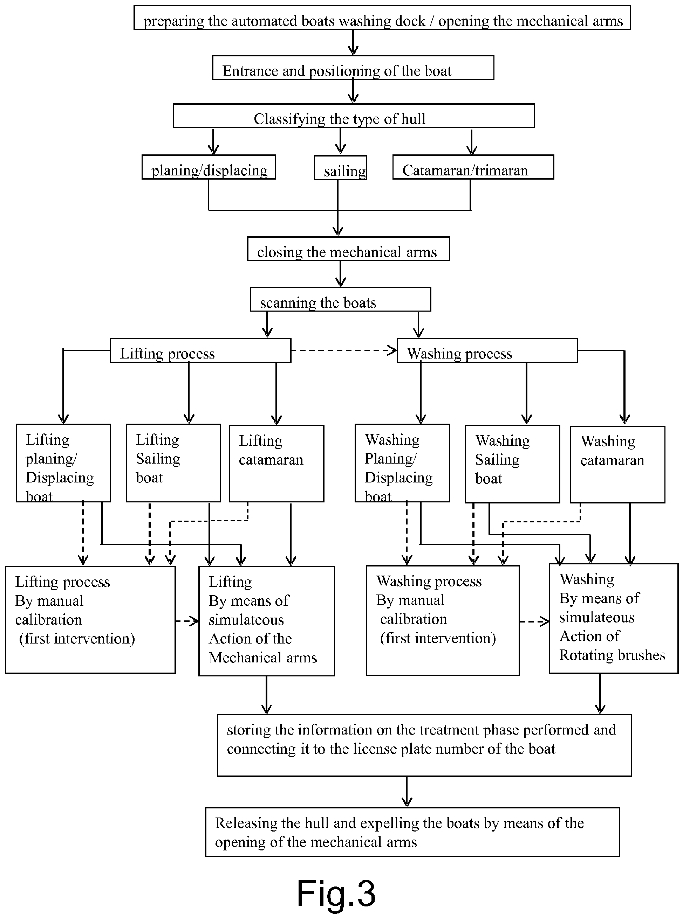

In figure 3 a flow diagram of the method for boats washing in the automated boats washing dock is shown.

According to an aspect of the invention, the step of scanning the boat to rebuild its three-dimensional geometry to reconstruct its three-dimensional geometry, by means of a dedicated software, comprises the step of scanning the immersed hull by means of a sonar and of detecting the profile of the hull by means of a laser.

According to another aspect of the invention, the boat treatment phase comprises performing the lifting of the boat, or performing the boat washing, or performing the boat lifting and then the boat washing. In particular, the boat lifting is performed in a different manner depending on the type of boat defined in the classification stage.

Advantageously, according to the invention, in the case of first intervention on a boat, the lifting step comprises performing a step of accompanying the boat in the lifting position by means of manual calibration.

Furthermore, the lifting step comprises performing the lifting by means of simultaneous action of a plurality of mechanical arms simultaneously operating on the gripping points of the immersed hull such as to ensure the lifting of the boat.

Advantageously, according to the invention, in the case of first intervention on a boat, the washing step comprises performing the washing action by manual calibration.

Furthermore, the washing step comprises washing by means of combined action of rotating brushes simultaneously operating on the immersed hull and on the sides of the boat.

Furthermore, the step of scanning the boat is preceded by the step of putting the axis of the hull in centering with the axis of the dock system 100, using geometric redundancies and retroactive control.

According to one aspect of the invention, the scanning of the immersed hull is performed by a sonar profiler.

Advantageously, the washing process is performed by the combined action of the rotating horizontal and vertical brushes.

Advantageously, according to the invention, the washing is performed on the bottom, on the sides, on the drifts, on the transom, on the bulbs, on the fins and on the various appendages of the boat.

Advantageously, according to the invention, the washing is also performed on the propulsion organs and on the governance organs, such as propellers, rudders, shaft lines, stabilizing fins, scuppers.

Advantageously, the washing step comprises the steps of operating the rotation of the brushes, of activating the air-water descaling nozzles and of activating the block for exhausting the washing waste water.

Advantageously, according to the invention, during the crossing of the boat in the washing block, the relative positions of the brushes with respect to the geometry of the hull are handled by means of the dedicated control software that allows to communicate to a central control system the punctual hull position and to manage the geometric variation of the brushes positions, depending on the geometry of the hull relative to the variation timely detected.

Advantageously, according to the invention, the dock 100 comprises brushes dedicated to boat appendices, for example keel and rudder, which guarantee the cleaning without contacting the hull.

Therefore, the automated boats washing dock and relative method for boats washing in the automated boats washing dock according to the invention allow to manage the lifting and the washing of the boat in a precise manner due to the geometry scanning of the boat surfaces.

Another advantage of the automated boats washing dock and relative method for boats washing in the automated boats washing dock according to the invention consists in the fact that it is not necessary to remove the boat from the water to use the washing plant.

Moreover, the automated boats washing dock and relative method for boats washing in the automated boats washing dock according to the invention are much more effective and efficient than the known systems and methods.

Finally it is clear that the automated boats washing dock and relative method for boats washing in the automated boats washing dock according to the invention described and illustrated here can be modified and varied without departing from the protective scope of the present invention, as defined in the appended claims.

## Claims

1. Automated boats washing dock (100) comprising:
- at least one boat's hull washing block (103) configured for performing the washing of the boat;
- At least one translation block (101) for moving the hull in the lengthwise direction within the dock (100);
- At least one lifting block (102) for lifting the boat within the dock (100);
**Characterized in that** said translation block (101) comprises:
- At least one block (105) for managing the hull's entrance within the dock (100), configured for drawing the boats and their positioning within the system (100) and for scanning the hull bottom, detecting its geometry and performing a computer reconstruction by means of a dedicated software;
- Mechanical arms used for the hull handling;
- At least one block (106) for managing the hull movements across the dock (100) by means of the mechanical arms and using the geometry detected and reconstructed by means of the dedicated computer software; and
- At least one block (107) for managing the hull's exit from the dock (100) by means of the mechanical arms.

2. Automated boats washing dock (100) according to claim 1, **characterized in** comprising at least one suction and purification block (104) for suction and purification of waste water of the hull washing.

3. Automated boats washing dock (100) according to claim 1, **characterized in that** said suction and purification block (104) of waste water is connected to suction inlets positioned close to the dock (100).

4. Automated boats washing dock (100) according to claim 1, **characterized in that** said lifting block (102) comprises hinged mechanical arms configured for stretching towards certain gripping points of the hull established as a function of the scanned geometry and for making the lifting of the hull.

5. Method for washing a boat in an automated boats washing dock (100) comprising the step of washing the boat's hull within the automated boats washing dock (100), **characterized in** comprising the steps of:
- Opening mechanical arms comprised in the automated boats washing dock (100) for taking over the boat;
- supporting the boat entering and positioning within the automated boats washing dock (100);
- Classifying the hull's type as one of those comprised in the group constituted by: planing / displacing hull, sailing, catamaran / trimaran;
- Closing the mechanical arms to take over the boat;
- Scanning the boat to reconstruct its three-dimensional geometry, by means of a dedicated software;
- Performing a treatment phase of the boat;
- Storing the information related to the treatment phase associating it to the license plate number of the boat;
- Releasing the hull and expelling the boat opening the mechanical arms.

6. Method for washing a boat in an automated boats washing dock (100) according to claim 5, **characterized in that** the step of scanning the boat to reconstruct its three-dimensional geometry, by means of a dedicated software, comprises the step of scanning the immersed hull's portion by means of a sonar and of laser detecting the hull's profile.

7. Method for washing a boat in an automated boats washing dock (100) according to claim 5, **characterized in that** the boat treatment phase comprises performing a step selected from:
- lifting the boat;
- Washing the boat;
- Performing sequentially the lifting and the washing of the boat.

8. Method for washing a boat in an automated boats washing dock (100) according to claim 7, **characterized in that** the step of lifting comprises accompanying the boat in the lifting position by means of manual calibration, at the first operation on the boat.

9. Method for washing a boat in an automated boats washing dock (100) according to claim 7, **characterized in that** the step of lifting comprises performing the lifting by means of a plurality of simultaneous mechanical arms operating on gripping points of the immersed hull's portion so that to ensure the lifting of the boat.

10. Method for washing a boat in an automated boats washing dock (100) according to claim 7, **characterized in that** the washing step comprises performing the washing through a manual calibration at the first operation on the boat.

11. Method for washing a boat in an automated boats washing dock (100) according to claim 7, **characterized in that** the washing step comprises performing the washing by means of combined action of rotating brushes simultaneously operating on the immersed hull's portion and on the sides of the boat.

12. Method for washing a boat in an automated boats washing dock (100) according to claim 5, **characterized in that** the step of scanning the boat is preceded by the step of putting the hull's axis centered with the axis of the dock (100).

13. Method for washing a boat in an automated boats washing dock (100) according to claim 5, **characterized in that** the step of scanning the boat comprises the step of scanning the immersed hull's portion by means of a sonar profiler.

## Patentansprüche

1. Automatisiertes Schiffswaschdock (100), umfassend:
- mindestens einen Schiffsrumpfwaschblock (103), der dazu ausgelegt ist, das Waschen des Schiffes durchzuführen;
- mindestens einen Übertragungsblock (101) zum Bewegen des Rumpfes innerhalb des Docks (100) in Längsrichtung;
- mindestens einen Hebeblock (102) zum Heben des Schiffes innerhalb des Docks (100);
**dadurch gekennzeichnet, dass** der Übertragungsblock (101) Folgendes umfasst:
- mindestens einen Block (105) zum Manövrieren des Rumpfes in das Dock (100), der dazu ausgelegt ist, die Schiffe zu ziehen und innerhalb des Systems (100) zu positionieren und den Rumpfboden abzutasten, dessen Geometrie zu erkennen und eine computertechnische Rekonstruktion mithilfe einer speziellen Software durchzuführen;
- mechanische Arme zum Bewegen des Rumpfes;
- mindestens einen Block (106) zum Steuern der Rumpfbewegungen im Dock (100) mithilfe der mechanischen Arme und unter Verwendung der mithilfe der speziellen Computersoftware erkannten und rekonstruierten Geometrie und
- mindestens einen Block (107) zum Manövrieren des Rumpfes beim Verlassen des Docks (100) mithilfe der mechanischen Arme.

2. Automatisiertes Schiffswaschdock (100) nach Anspruch 1, **dadurch gekennzeichnet, dass** es mindestens einen Ansaug- und Reinigungsblock (104) zum Ansaugen und Reinigen des beim Waschen des Rumpfes angefallenen Abwassers umfasst.

3. Automatisiertes Schiffswaschdock (100) nach Anspruch 1, **dadurch gekennzeichnet, dass** der Ansaug- und Reinigungsblock (104) des Abwassers an die Sauganschlüsse in der Nähe des Docks (100) angeschlossen ist.

4. Automatisiertes Schiffswaschdock (100) nach Anspruch 1, **dadurch gekennzeichnet, dass** der Hebeblock (102) klappbare mechanische Arme umfasst, die dazu ausgelegt sind, in Richtung bestimmter Greifpunkte des Rumpfes auszufahren, die abhängig von der ermittelten Geometrie angeordnet sind, und das Heben des Rumpfes durchzuführen.

5. Verfahren des Waschens eines Schiffes in einem automatisierten Schiffswaschdock (100), umfassend den Schritt des Waschens des Schiffsrumpfes in dem automatisierten Schiffswaschdock (100), **dadurch gekennzeichnet, dass** es die folgenden Schritte umfasst:
- Öffnen der mechanischen Arme, die in dem automatisierten Schiffswaschdock (100) enthalten sind, um das Schiff zu übernehmen;
- Unterstützen der Schiffseinfahrt und des Positionierens in dem automatisierten Schiffswaschdock (100) ;
- Klassifizieren des Rumpftyps als einem in der Gruppe bestehend aus Folgendem enthaltenen: Gleiter/Verdränger, Segelschiff, Katamaran/Trimaran;
- Schließen der mechanischen Arme, um das Schiff zu übernehmen;
- Abtasten des Schiffes mithilfe einer speziellen Software, um seine dreidimensionale Geometrie zu rekonstruieren;
- Durchführen einer Behandlungsphase des Schiffes;
- Speichern der Informationen über die Behandlungsphase und Vergleichen der Informationen mit dem Typenschild des Schiffes;
- Freigeben des Rumpfes und Ausschieben des Schiffes durch Öffnen der mechanischen Arme.

6. Verfahren des Waschens eines Schiffes in einem automatisierten Schiffswaschdock (100) nach Anspruch 5, **dadurch gekennzeichnet, dass** der Abtastschritt des Schiffes zur Rekonstruierung seiner dreidimensionalen Geometrie mithilfe einer speziellen Software den Schritt des Abtastens des eingetauchten Rumpfteiles mithilfe eines Sonars und der Lasererfassung des Rumpfprofils umfasst.

7. Verfahren des Waschens eines Schiffes in einem automatisierten Schiffswaschdock (100) nach Anspruch 5, **dadurch gekennzeichnet, dass** die Behandlungsphase des Schiffes das Durchführen eines Schrittes ausgewählt aus Folgendem umfasst:
- Heben des Schiffes;
- Waschen des Schiffes;
- sequenzielles Durchführen des Hebens und Waschens des Schiffes.

8. Verfahren des Waschens eines Schiffes in einem automatisierten Schiffswaschdock (100) nach Anspruch 7, **dadurch gekennzeichnet, dass** der Hebeschritt das Begleiten des Schiffes in die Hebeposition mithilfe einer manuellen Kalibrierung bei der ersten Bewegung des Schiffes umfasst.

9. Verfahren des Waschens eines Schiffes in einem automatisierten Schiffswaschdock (100) nach Anspruch 7, **dadurch gekennzeichnet, dass** der Hebeschritt das Heben mithilfe einer Vielzahl von mechanischen Armen, die gleichzeitig auf Greifpunkte des eingetauchten Rumpfteiles wirken, um das Heben des Schiffes zu sichern, umfasst.

10. Verfahren des Waschens eines Schiffes in einem automatisierten Schiffswaschdock (100) nach Anspruch 7, **dadurch gekennzeichnet, dass** der Waschschritt das Waschen über eine manuelle Kalibrierung bei der ersten Bewegung des Schiffes umfasst.

11. Verfahren des Waschens eines Schiffes in einem automatisierten Schiffswaschdock (100) nach Anspruch 7, **dadurch gekennzeichnet, dass** der Waschschritt das Waschen mithilfe einer kombinierten Aktion von rotierenden Bürsten umfasst, die gleichzeitig auf den eingetauchten Rumpfteil und auf die Seiten des Schiffes wirken.

12. Verfahren des Waschens eines Schiffes in einem automatisierten Schiffswaschdock (100) nach Anspruch 5, **dadurch gekennzeichnet, dass** dem Schritt des Schiffabtastens der Schritt vorausgeht, bei dem die Achse des Rumpfes auf der Achse des Docks (100) zentriert wird.

13. Verfahren des Waschens eines Schiffes in einem automatisierten Schiffswaschdock (100) nach Anspruch 5, **dadurch gekennzeichnet, dass** der Schritt des Schiffabtastens den Schritt des Abtastens des eingetauchten Rumpfteiles mithilfe eines Sonar-Profilers umfasst.

## Revendications

1. Un dock de lavage automatisé de bateaux (100) comprenant:
- au moins un bloc de lavage de la coque du bateau (103) configuré pour laver le bateau;
- Au moins un bloc de translation (101) pour déplacer la coque dans le sens de la longueur à l'intérieur du dock (100) ;
- Au moins un bloc de levage (102) pour hisser le bateau à l'intérieur du dock (100);
**Caractérisé par le fait que** ledit bloc de translation (101) comprend:
- Au moins un bloc (105) de gestion de l'admission de la coque dans le dock (100), configuré pour tirer les bateaux et leur positionnement dans le système (100) et pour balayer le fond de la coque, détecter sa géométrie et effectuer une reconstruction informatique avec un logiciel spécialisé;
- Des bras mécaniques utilisés pour la manutention de la coque;
- Au moins un bloc (106) pour gérer les mouvements de la coque à travers le dock (100) au moyen des bras mécaniques et en utilisant la géométrie détectée et reconstruite avec le logiciel informatique spécialisé; et
- Au moins un bloc (107) pour gérer la sortie de la coque du dock (100) avec des bras mécaniques.

2. Un dock de lavage automatisé de bateaux (100) selon la revendication 1, **caractérisé en ce qu'**il comprend au moins un bloc d'aspiration et de purification (104) pour l'aspiration et la purification des eaux usées du lavage de la coque.

3. Un dock de lavage automatisé de bateaux (100) selon la revendication 1, **caractérisé en ce que** ledit bloc d'aspiration et de purification (104) des eaux usées est connecté à des bouches d'aspiration positionnées à proximité du dock (100).

4. Un dock de lavage automatisé de bateaux (100) selon la revendication 1, **caractérisé en ce que** ledit bloc de levage (102) comprend des bras mécaniques articulés configurés pour s'étirer vers certains points de préhension de la coque établit en fonction de la géométrie balayée et pour le levage de la coque.

5. Une méthode de lavage d'un bateau dans un dock de lavage automatisé de bateaux (100) comprenant l'étape consistant à laver la coque du bateau à l'intérieur du dock de lavage automatisé de bateaux (100), **caractérisée en ce qu'**elle comprend les étapes suivantes:
- Ouvrir des bras mécaniques compris dans le dock de lavage automatisé de bateaux (100) pour prendre en charge le bateau;
- Assister l'entrée et le positionnement du bateau dans le dock de lavage automatisé de bateaux (100);
- Classer le type de coque comme l'un de ceux compris dans le groupe constitué par: coque planante / de déplacement, voile, catamaran / trimaran;
- Fermer les bras mécaniques pour prendre en charge le bateau;
- Balayer le bateau pour reconstruire sa géométrie tridimensionnelle, avec un logiciel spécialisé;
- Effectuer une phase de traitement du bateau;
- Enregistrer les informations relatives à la phase de traitement en les associant au numéro de plaque d'immatriculation du bateau;
- Libérer la coque et expulser le bateau en ouvrant les bras mécaniques.

6. Une méthode de lavage d'un bateau dans un dock de lavage automatisé de bateaux (100) selon la revendication 5, **caractérisée en ce que** l'étape de balayage du bateau pour reconstruire sa géométrie tridimensionnelle, avec un logiciel spécialisé, comprend l'étape de balayage de la partie immergée de la coque au moyen d'un sonar et de détection laser du profil de la coque.

7. Une méthode lavage d'un bateau dans un dock de lavage automatisé de bateaux (100) selon la revendication 5, **caractérisée en ce que** la phase de traitement du bateau comprend la réalisation d'une étape choisie parmi:
- le levage du bateau;
- Le lavage du bateau;
- L'exécution séquentielle du levage et du lavage du bateau.

8. Une méthode de lavage d'un bateau dans un dock de lavage automatisé de bateaux (100) selon la revendication 7, **caractérisée en ce que** l'étape de levage comprend l'accompagnement du bateau en position de levage par calibrage manuel, lors de la première opération sur le bateau.

9. Une méthode de lavage d'un bateau dans un dock de lavage automatisé de bateaux (100) selon la revendication 7, **caractérisée en ce que** l'étape de levage comprend l'exécution du levage au moyen d'une pluralité de bras mécaniques simultanés opérant sur des points de préhension de la partie immergée de la coque pour assurer le levage du bateau.

10. Une méthode de lavage d'un bateau dans un dock de lavage automatisé de bateaux (100) selon la revendication 7, **caractérisée en ce que** l'étape de lavage comprend l'exécution du lavage par un calibrage manuel lors de la première opération sur le bateau.

11. Une méthode de lavage d'un bateau dans un dock de lavage automatisé de bateaux (100) selon la revendication 7, **caractérisée en ce que** l'étape de lavage comprend l'exécution du lavage au moyen d'une action combinée de plusieurs brosses rotatives opérant simultanément sur la partie immergée de la coque et sur les côtés bateau.

12. Une méthode de lavage d'un bateau dans un dock de lavage automatisé de bateaux (100) selon la revendication 5, **caractérisée en ce que** l'étape de balayage du bateau est précédée par l'étape d'alignement de l'axe de la coque avec l'axe du dock (100).

13. Une méthode de lavage d'un bateau dans un dock de lavage automatisé de bateaux (100) selon la revendication 5, **caractérisée en ce que** l'étape de balayage du bateau comprend l'étape de balayage de la partie immergée de la coque avec 'un dispositif de profilage par sonar.
